# EUROPEAN PATENT SPECIFICATION

(11) **EP 3 815 661 B1**
(45) Date of publication and mention of the grant of the patent: **26.07.2023**
(21) Application number: 20191242.5
(22) Date of filing: 17.08.2020
(51) Int. Cl.: H01M 50/204, H01M 50/244, H01M 50/249, H01M 50/262

(54) **BATTERY MOUNTING STRUCTURE FOR MOBILITY SCOOTER**
BATTERIEMONTAGESTRUKTUR FÜR MOBILITÄTSROLLER
STRUCTURE DE MONTAGE DE BATTERIE POUR SCOOTER POUR MOBILITÉ RÉDUITE

(30) Priority: 30.10.2019 JP 2019197229
(43) Date of publication of application: 05.05.2021
(73) Proprietor: MERITS HEALTH PRODUCTS CO., LTD., Taichung City 408 (TW)
(72) Inventor: CHENG, Ming-Chuan, 408 TAICHUNG CITY (TW)
(74) Representative: Straus, Alexander

(56) References cited:
- EP-A1- 2 848 456
- CN-A- 101 920 723
- GB-A- 2 432 878
- TW-U- M 256 162
- US-A1- 2015 114 733
- US-A1- 2019 225 294

## Description

### BACKGROUND OF THE INVENTION

### 1. Technical Field

The present disclosure relates to mobility scooters and, more particularly, to a battery mounting structure for a mobility scooter.

### 2. Description of the Related Art

Conventional battery mounting structures for mobility scooters are characterized by a top-to-bottom mounting procedure and structure, which takes up much space, not to mention that mounting and demounting may be affected by related components, such as seats. As a result, conventional battery mounting structures for mobility scooters lack ease of use and pose threats to user safety. US2019225294 A1 disclosed such a mobility scooter. EP2848456A1 disclosed a motorcycle comprising a mounting structure having guiding rails.

Therefore, the drawbacks of conventional battery mounting structures for mobility scooters have to be overcome.

### BRIEF SUMMARY OF THE INVENTION

In view of the aforesaid drawbacks of the prior art, it is an objective of the present disclosure to provide a battery mounting structure for a mobility scooter. The battery mounting structure not only renders battery mounting and changing easy but also features enhanced structural simplicity and stability.

In order to achieve the above and other objectives, the present disclosure provides a mobility scooter comprising a battery mounting structure as defined in claim 1. Preferred embodiments are defined in dependent claims 2-9.

### BRIEF DESCRIPTION OF THE SEVERAL VIEWS OF THE DRAWINGS

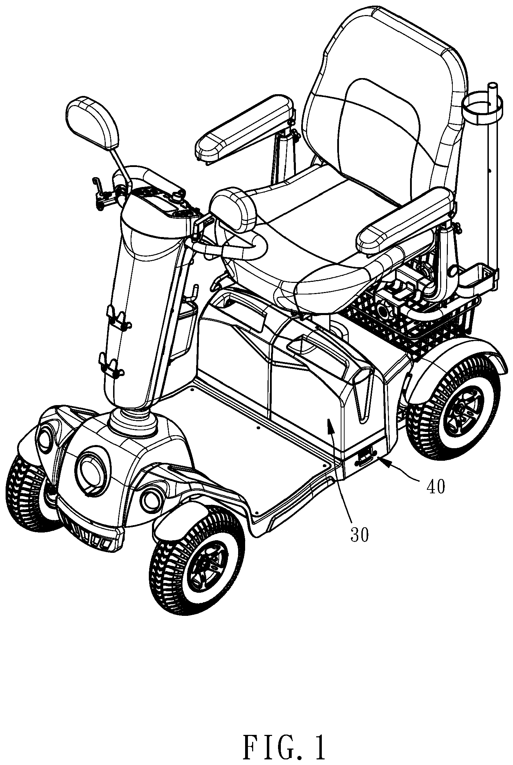

FIG. 1 is an assembled perspective view of a preferred embodiment of the present disclosure.

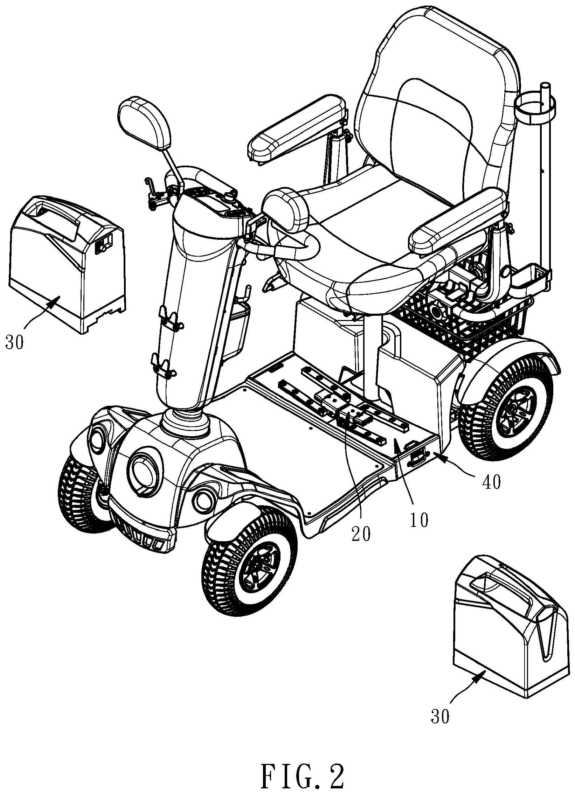

FIG. 2 is a perspective view of a preferred embodiment of the present disclosure and a battery unit removed therefrom.

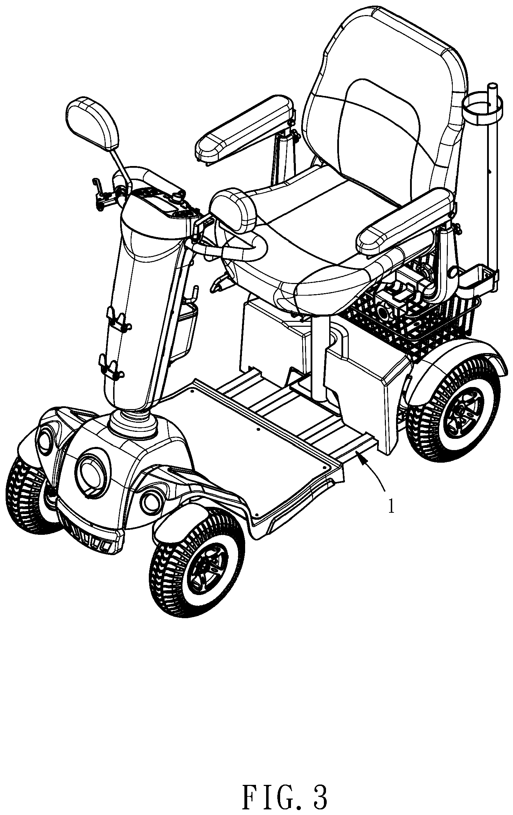

FIG. 3 is a perspective view of a preferred embodiment of the present disclosure, omitting a base unit.

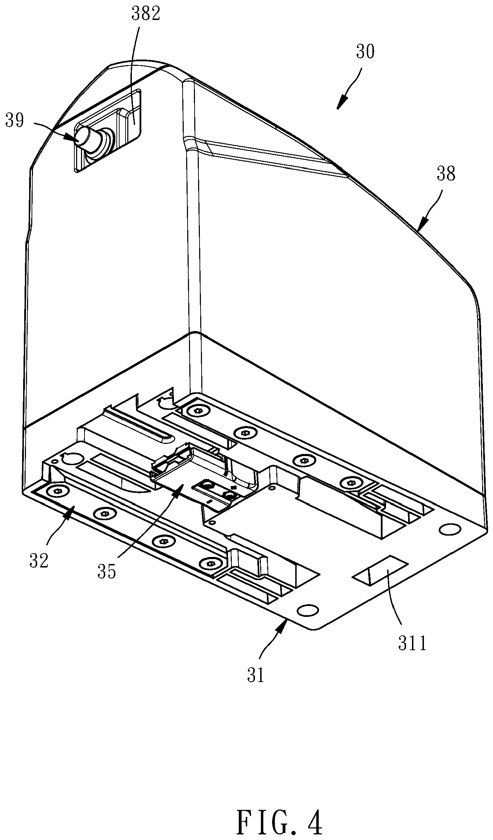

FIG. 4 is a perspective view of the battery unit taken from another angle according to a preferred embodiment of the present disclosure.

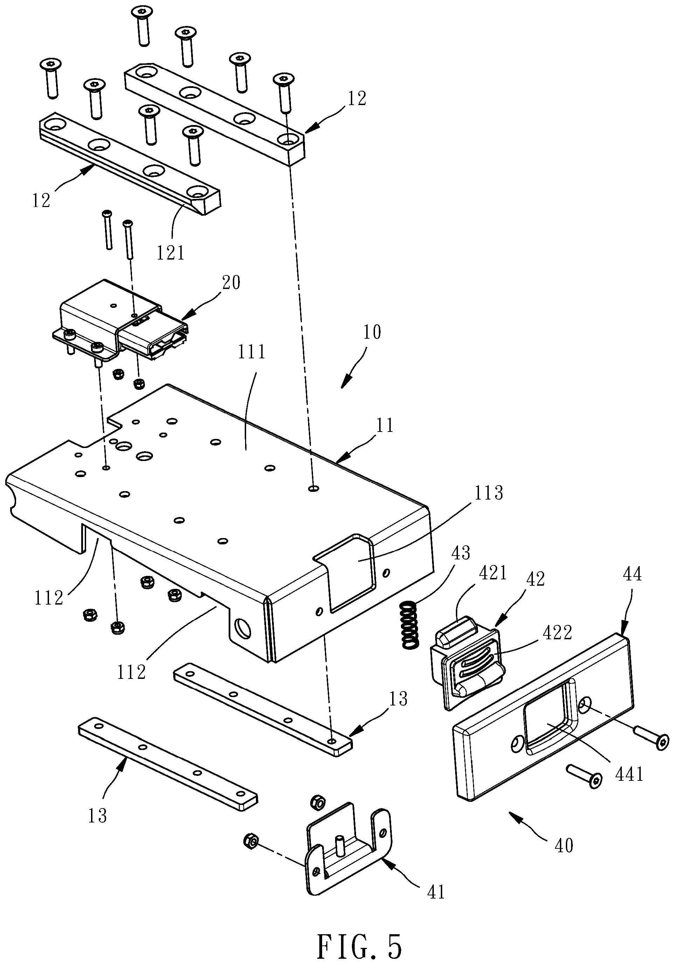

FIG. 5 is an assembled perspective view of the base unit and an engaging unit according to a preferred embodiment of the present disclosure.

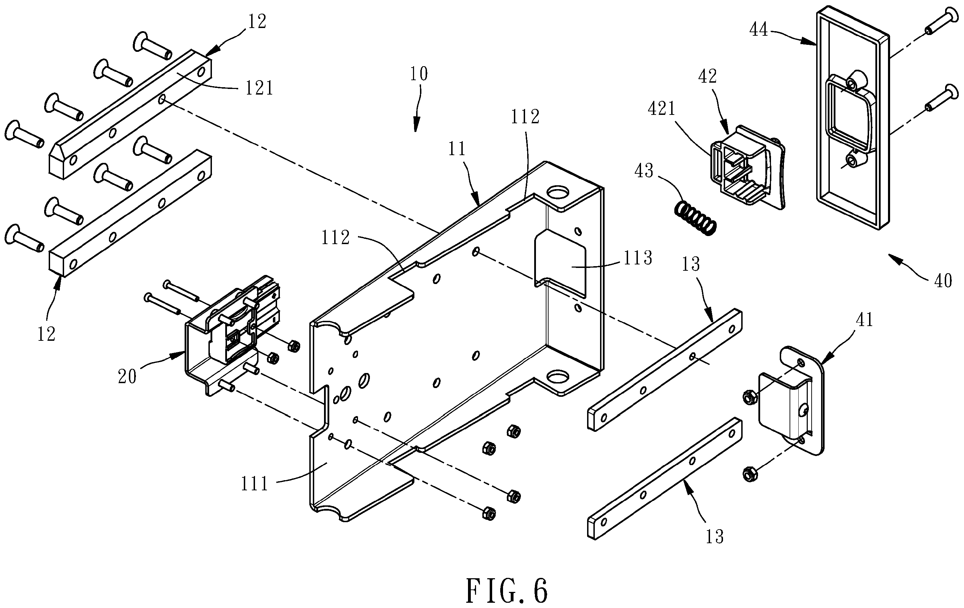

FIG. 6 is another assembled perspective view of the base unit and the engaging unit according to a preferred embodiment of the present disclosure.

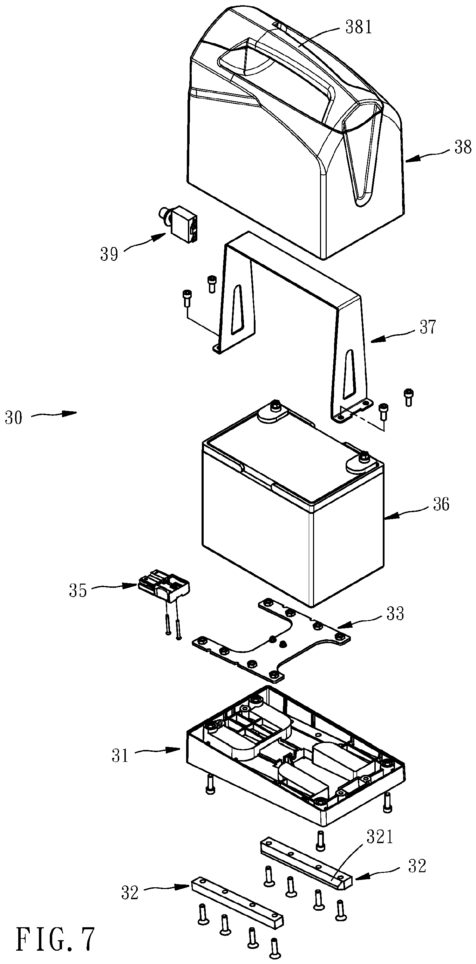

FIG. 7 is an exploded view of the battery unit according to a preferred embodiment of the present disclosure.

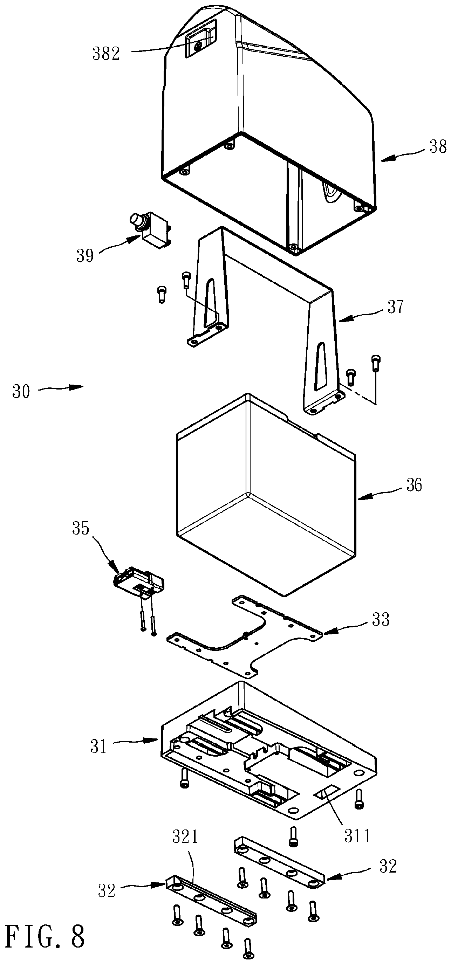

FIG. 8 is another exploded view of the battery unit according to a preferred embodiment of the present disclosure.

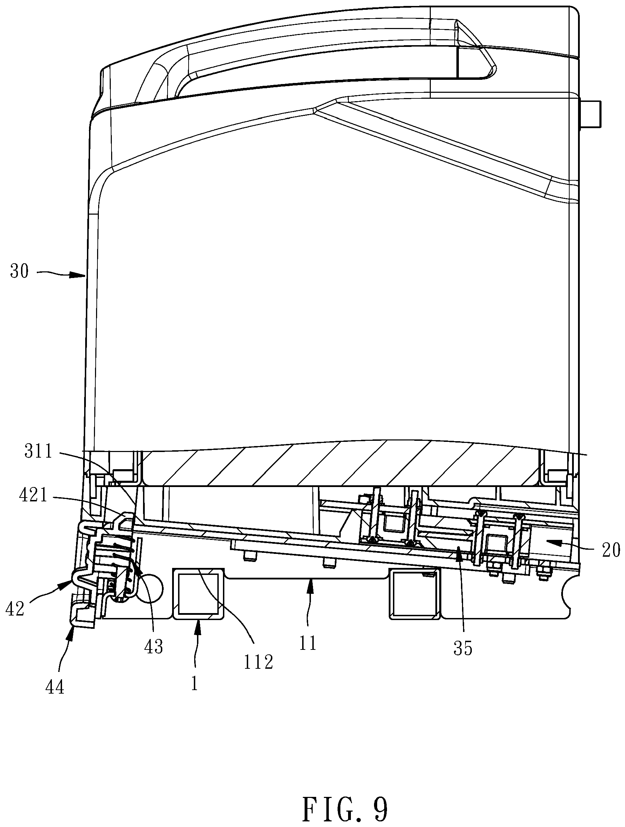

FIG. 9 is an assembled cross-sectional view of a preferred embodiment of the present disclosure.

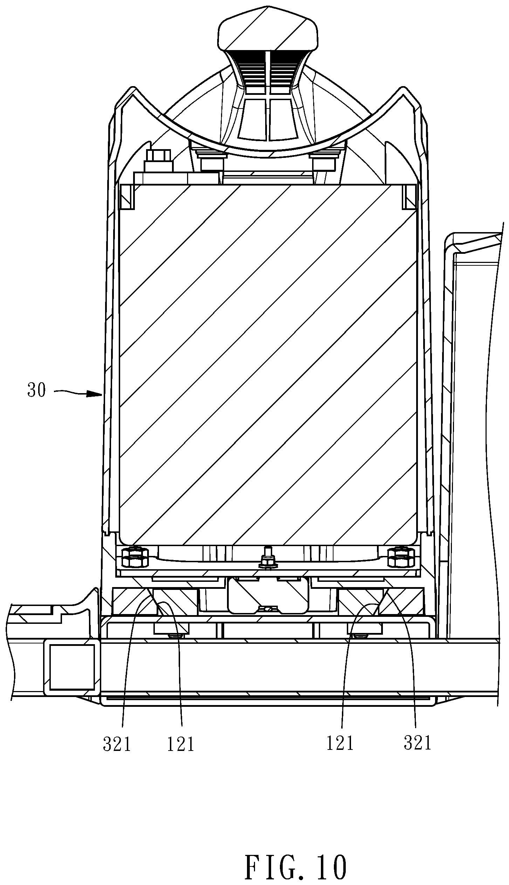

FIG. 10 is another assembled cross-sectional view of a preferred embodiment of the present disclosure.

### DETAILED DESCRIPTION OF THE INVENTION

The present disclosure is hereunder illustrated with embodiments, depicted with accompanying drawings, and described below.

Referring to the diagrams, in a preferred embodiment of the present disclosure, a battery mounting structure for a mobility scooter is provided in the number of two, side by side, one facing leftward and the other facing rightward. Each battery mounting structure comprises a base unit (10), a power connection device (20), a battery unit (30), and an engaging unit (40). The base unit (10) is disposed on a chassis (1) of the mobility scooter. The base unit (10) has a base member (11) and two guiding rails (12) disposed on the base member (11).

In this embodiment, the mobility scooter has a chassis (1), and the base unit (10) has two beam slots (112) each straddlingly disposed on the chassis (1). The base unit (10) is fixed to the chassis (1) by welding.

The base unit (10) has two guiding rail fixing members (13) disposed below the base member (11) and fixed to the guiding rails (12) with bolts, respectively.

The base member (11) has a mount opening (113). The guiding rails (12) each have an oblique surface (121).

The power connection device (20) is disposed on the base unit (10) and electrically connected to an electric motor unit of the mobility scooter. In this embodiment, the power connection device (20) is disposed between the two guiding rails (12) of the base unit (10).

The battery unit (30) has a bottom (31), an engaging portion (311) disposed on the bottom (31) from below, two sliding rails (32) slidably matching the guiding rails (12) of the base unit (10), respectively, and a power connection device (35) disposed on the bottom (31) and pluggable to the power connection device (20).

In this embodiment, the battery unit (30) further has a battery body (36), a battery body fixing member (37), and a casing (38). The battery body (36) is fixed to the bottom (31) with the battery body fixing member (37). The casing (38) is fixed to the bottom (31). The casing (38) encloses the battery body (36).

The sliding rails (32) each have an oblique surface (321). The oblique surfaces (321) of the sliding rails (32) slidably match the oblique surfaces (121) of the guiding rails (12), respectively.

In this embodiment, the battery unit (30) has a sliding rail fixing member (33) fixed to the sliding rails (32). The sliding rail fixing member (33) is disposed on the bottom (31) and fastened to the sliding rails (32) with bolts.

In this embodiment, the battery unit (30) has a fused switch (39) disposed on the one side of the battery unit (30) and positioned proximate to the middle, whereas a refuge (382) is disposed at the casing (38) of the battery unit (30) and corresponds in position to the fused switch (39) to enable the fused switch (39) of the other battery unit (30) to exit the refuge (382) and penetrate the refuge (382).

The battery unit (30) further has a handle (381).

The battery unit (30) is configured to be moved relative to the base unit (10) in a mounting direction and a demounting direction, which are the leftward direction and the rightward direction of the mobility scooter in this embodiment, but the present disclosure is not limited thereto.

In this embodiment, a top surface (111) of the base unit (10) slopes downward in the mounting direction, and the guiding rails (12) of the base unit (10) slope downward in the mounting direction.

The engaging unit (40) is disposed on the base unit (10) and is movably operable relative to the base unit (10). The engaging unit (40) has a fastening portion (421) which abuts against the engaging portion (311) of the battery unit (30).

In this embodiment, the engaging unit (40) has an inner blocking member (41) and an operating member (42). The operating member (42) is movably operable relative to the inner blocking member (41).

The inner blocking member (41) is screwed to the base member (11) of the base unit (10).

The operating member (42) is movably mounted at the mount opening (113) of the base member (11). An elastic means (43) is fitted between the inner blocking member (41) and the operating member (42).

The operating member (42) has a fastening portion (421) and an operating portion (422). The fastening portion (421) stops movement and detachment of the battery unit (30). Users press their fingers on the operating portion (422) to push and move the operating member (42).

The engaging unit (40) further has an outer blocking member (44) which can be mounted on the base member (11) of the base unit (10). The outer blocking member (44) has an outlet (441) corresponding in position to the operating portion (422) of the operating member (42).

In this embodiment, the sliding rails (32) of the battery unit (30) match the guiding rails (12) of the base unit (10), such that the battery unit (30) can be mounted on the base unit (10) quickly and firmly and connected to the power connection device (20) precisely.

The oblique surfaces (321) of the sliding rails (32) slidably match the oblique surfaces (121) of the guiding rails (12), respectively, precisely.

The guiding rails (12) of the base unit (10) slope downward in the mounting direction, so as to facilitate mounting and prevent a fall or detachment.

The base unit (10) is self-contained and thus is advantageously applicable to various mobility scooters, so as to achieve compatibility and reduce spare parts and components. Furthermore, when changeable, the constituent components of the battery mounting structure of the present disclosure can be easily changed for the sake maintenance.

The base member (11) of the base unit (10) can be part of the chassis or can be integrally formed with the chassis, such that the chassis includes the base member (11).

The constituent elements of the battery unit (30) enable easy assembly, attain structural stability, and enhance its integrity.

The aforesaid objective of the present disclosure can be achieved, because of the aforesaid structures and features of the present disclosure.

In addition to the aforesaid embodiments, the present disclosure can be implemented by variant embodiments below.

For instance, each of the base unit (10), power connection device (20), battery unit (30) and engaging unit (40) is not necessarily in the number of two but may be in the number of one.

Alternatively, the two battery units (30) do not necessarily correspond in position to each other and contact each other at the middle position.

Alternatively, the engaging unit (40) is not necessarily mounted on the base unit (10) but may be mounted on the battery unit (30), as both are equivalent applications.

Alternatively, in addition to welding, the base unit (10) can be fixed to the chassis (1) by screwing or riveting.

Alternatively, the inner blocking member (41) of the engaging unit (40) is integrally formed with the base member (11) of the base unit (10) to further reduce independent constituent elements.

The guiding rails (12) of the base unit (10) do not necessarily slope downward in the mounting direction; instead, the guiding rails (12) may have an oblique or horizontal mounting direction.

In conclusion, the battery mounting structure for a mobility scooter according to the present disclosure is advantageous in that the sliding rails (32) of the battery unit (30) match the guiding rails (12) of the base unit (10) to not only enable the battery unit (30) to be mounted on the base unit (10) quickly and firmly but also enable the battery unit (30) to be connected to the power connection device (20) precisely, so as to achieve the objective of the present disclosure.

## Claims

1. Mobility scooter comprising a battery mounting structure, the battery mounting structure comprises:
a base unit (10) disposed on a chassis (1) of the mobility scooter and having a base member (11) and two guiding rails (12);
a power connection device (20) disposed on the base unit (10) and electrically connected to an electric motor unit of the mobility scooter;
a battery unit (30) having two sliding rails (32) slidably matching the guiding rails (12) of the base unit (10), respectively, a power connection device (35) pluggable to the power connection device (20), and an engaging portion (311), wherein the battery unit (30) is configured to be moved relative to the base unit (10) in a mounting direction and a demounting direction; and
an engaging unit (40) disposed on the base unit (10), movably operable relative to the base unit (10), and having a fastening portion (421) abutting against the engaging portion (311) of the battery unit (30);
**characterized in that** the guiding rails (12) of the base unit (10) each have an oblique surface (121), and the sliding rails (32) of the battery unit (30) each have an oblique surface (321), allowing the oblique surfaces (321) of the sliding rails (32) to slidably match the oblique surfaces (121) of the guiding rails (12).

2. The battery mounting structure according to claim 1, **characterized in that** the guiding rails (12) of the base unit (10) slope downward in the mounting direction.

3. The battery mounting structure according to claim 1, **characterized in that** the engaging unit (40) has an operating member (42) and an elastic means (43) abutting against the operating member (42).

4. The battery mounting structure according to claim 1, **characterized in that** the mobility scooter has a chassis (1), and the base unit (10) has two beam slots (112) each straddlingly disposed on the chassis (1).

5. The battery mounting structure according to claim 1, **characterized in that** the base unit (10) has one guiding rail fixing member (13) fixed to the guiding rails (12).

6. The battery mounting structure according to claim 1, **characterized in that** the battery unit (30) has a sliding rail fixing member (33) fixed to the sliding rails (32).

7. The battery mounting structure according to claim 1, **characterized in that** the battery unit (30) has a bottom (31), a battery body (36) fixed to the bottom (31), and a casing (38) fixed to the bottom (31).

8. The battery mounting structure according to claim 1, **characterized in that** the battery unit (30) is provided in the number of two, one facing leftward and the other facing rightward.

9. The battery mounting structure according to claim 8 **characterized in that** the battery unit (30) has a fused switch (39) disposed on a side of the battery unit (30) and positioned proximate to the middle, wherein a refuge (382) is disposed at the battery unit (30) and corresponds in position to the fused switch (39) to enable the fused switch (39) of any said battery unit (30) to exit the refuge (382) and penetrate the refuge (382).

## Patentansprüche

1. Elektromobil mit einem Batteriemontageaufbau, worin der Batteriemontageaufbau umfasst:
eine Basiseinheit (10), die auf einem Fahrgestell (1) des Elektromobils angeordnet ist und ein Basiselement (11) und zwei Führungsschienen (12) aufweist;
eine Stromverbindungsvorrichtung (20), die an der Basiseinheit (10) angeordnet und mit einer Elektromotoreinheit des Elektromobils elektrisch verbunden ist;
eine Batterieeinheit (30) mit zwei Gleitschienen (32), die jeweils gleitend mit den Führungsschienen (12) der Basiseinheit (10) zusammenpassen, einer Stromverbindungsvorrichtung (35), die an die Stromverbindungsvorrichtung (20) ansteckbar ist, und einem Eingriffsabschnitt (311), worin die Batterieeinheit (30) ausgestaltet ist, relativ zu der Basiseinheit (10) in einer Montagerichtung und einer Demontagerichtung bewegt zu werden; und
eine Eingriffseinheit (40), die an der Basiseinheit (10) angeordnet ist, relativ zu der Basiseinheit (10) beweglich ist und einen Befestigungsabschnitt (421) aufweist, der an dem Eingriffsabschnitt (311) der Batterieeinheit (30) anliegt;
**dadurch gekennzeichnet, dass** die Führungsschienen (12) der Basiseinheit (10) jeweils eine schräge Oberfläche (121) aufweisen und die Gleitschienen (32) der Batterieeinheit (30) jeweils eine schräge Oberfläche (321) aufweisen, wodurch die schrägen Oberflächen (321) der Gleitschienen (32) mit den schrägen Oberflächen (121) der Führungsschienen (12) gleitend zusammenpassen.

2. Batteriemontageaufbau nach Anspruch 1, **dadurch gekennzeichnet, dass** die Führungsschienen (12) der Basiseinheit (10) in Montagerichtung nach unten geneigt sind.

3. Batteriemontageaufbau nach Anspruch 1, **dadurch gekennzeichnet, dass** die Eingriffseinheit (40) ein Betätigungselement (42) und ein elastisches Mittel (43) aufweist, das an dem Betätigungselement (42) anliegt.

4. Batteriemontageaufbau nach Anspruch 1, **dadurch gekennzeichnet, dass** das Elektromobil ein Fahrgestell (1) aufweist und die Basiseinheit (10) zwei Trägerschlitze (112) aufweist, die jeweils übergreifend auf dem Fahrgestell (1) angeordnet sind.

5. Batteriemontageaufbau nach Anspruch 1, **dadurch gekennzeichnet, dass** die Basiseinheit (10) ein an den Führungsschienen (12) befestigtes Führungsschienen-Befestigungselement (13) aufweist.

6. Batteriemontageaufbau nach Anspruch 1, **dadurch gekennzeichnet, dass** die Batterieeinheit (30) ein an den Gleitschienen (32) befestigtes Gleitschienen-Befestigungselement (33) aufweist.

7. Batteriemontageaufbau nach Anspruch 1, **dadurch gekennzeichnet, dass** die Batterieeinheit (30) einen Boden (31), einen an dem Boden (31) befestigten Batteriekörper (36) und ein an dem Boden (31) befestigtes Gehäuse (38) aufweist.

8. Batteriemontageaufbau nach Anspruch 1, **dadurch gekennzeichnet, dass** die Batterieeinheit (30) in der Anzahl von zwei vorgesehen ist, worin eine nach links und die andere nach rechts gerichtet ist.

9. Batteriemontageaufbau nach Anspruch 8, **dadurch gekennzeichnet, dass** die Batterieeinheit (30) einen gesicherten Schalter (39) aufweist, der an einer Seite der Batterieeinheit (30) angeordnet und in der Nähe der Mitte positioniert ist, worin ein Schutzraum (382) an der Batterieeinheit (30) angeordnet ist und in seiner Position dem gesicherten Schalter (39) entspricht, so dass der gesicherte Schalter (39) jeder Batterieeinheit (30) den Schutzraum (382) durchdringen und aus dem Schutzraum (382) hervortreten kann.

## Revendications

1. Scooter de mobilité comprenant une structure de montage de la batterie, la structure de montage de la batterie comprend:
une unité de base (10) disposée sur un châssis (1) du scooter de mobilité et comportant un élément de base (11) et deux rails de guidage (12);
un dispositif de connexion électrique (20) disposé sur l'unité de base (10) et connecté électriquement à une unité de moteur électrique du scooter de mobilité;
une unité de batterie (30) comportant deux rails de glissement (32) s'adaptant de manière glissante aux rails de guidage (12) de l'unité de base (10), respectivement, un dispositif de connexion électrique (35) enfichable sur le dispositif de connexion électrique (20), et une partie d'engagement (311), l'unité de batterie (30) étant configurée pour être déplacée par rapport à l'unité de base (10) dans une direction de montage et une direction de démontage; et
une unité d'engagement (40) disposée sur l'unité de base (10), pouvant être déplacée par rapport à l'unité de base (10), et comportant une partie de fixation (421) venant en butée contre la partie d'engagement (311) de l'unité de batterie (30);
**caractérisé par le fait que** les rails de guidage (12) de l'unité de base (10) ont chacun une surface oblique (121), et les rails de glissement (32) de l'unité de batterie (30) ont chacun une surface oblique (321), permettant aux surfaces obliques (321) des rails de glissement (32) de s'adapter de manière glissante aux surfaces obliques (121) des rails de guidage (12).

2. Structure de montage de batterie selon la revendication 1, **caractérisée par le fait que** les rails de guidage (12) de l'unité de base (10) sont inclinés vers le bas dans la direction de montage.

3. Structure de montage de la batterie selon la revendication 1, **caractérisée par le fait que** l'unité d'engagement (40) comporte un organe de commande (42) et un moyen élastique (43) en butée contre l'organe de commande (42).

4. Structure de montage de la batterie selon la revendication 1, **caractérisée par le fait que** le scooter de mobilité a un châssis (1), et l'unité de base (10) a deux fentes de poutre (112) chacune disposée à cheval sur le châssis (1).

5. Structure de montage de la batterie selon la revendication 1, **caractérisée par le fait que** l'unité de base (10) comporte un élément de fixation du rail de guidage (13) fixé aux rails de guidage (12).

6. Structure de montage de la batterie selon la revendication 1, **caractérisée par le fait que** l'unité de batterie (30) a un élément de fixation du rail de glissement (33) fixé aux rails de glissement (32).

7. Structure de montage de la batterie selon la revendication 1, **caractérisée par le fait que** l'unité de batterie (30) a un fond (31), un corps de batterie (36) fixé au fond (31), et un boîtier (38) fixé au fond (31).

8. Structure de montage de la batterie selon la revendication 1, **caractérisée par le fait que** l'unité de batterie (30) est fournie au nombre de deux, l'une orientée vers la gauche et l'autre vers la droite.

9. Structure de montage de la batterie selon la revendication 8, **caractérisée par le fait que** l'unité de batterie (30) a un interrupteur à fusible (39) disposé sur un côté de l'unité de batterie (30) et positionné à proximité du milieu, dans lequel un refuge (382) est disposé sur l'unité de batterie (30) et correspond en position à l'interrupteur à fusible (39) pour permettre à l'interrupteur à fusible (39) de n'importe quelle unité de batterie (30) de sortir du refuge (382) et de pénétrer dans le refuge (382).
